# EUROPEAN PATENT APPLICATION

(11) **EP 2 993 100 A2**
(43) Date of publication of application: **09.03.2016**
(21) Application number: 15173839.0
(22) Date of filing: 25.06.2015
(51) Int. Cl.: B60W 40/00, B60K 6/20, B60W 20/14

(54) **REGENERATION CONTROLLER FOR HYBRID VEHICLE WITH TWO MOTORS**

(30) Priority: 29.08.2014 JP 2014175234
(71) Applicant: Mitsubishi Jidosha Kogyo Kabushiki Kaisha, Tokyo 108 (JP)
(72) Inventor: OGUMA, Takahiro, Tokyo, 108-8410 (JP); UEDA, Katsunori, Tokyo, 108-8410 (JP); HIRANO, Shigetoshi, Tokyo, 108-8410 (JP); HIRAO, Tadayoshi, Tokyo, 108-8410 (JP); SATO, Takuya, Tokyo, 108-8410 (JP); IKEDAYA, Hisakazu, Tokyo, 108-8410 (JP); HONDA, Kentaro, Tokyo, 108-8410 (JP)
(74) Representative: Regimbeau

(57) **Abstract**

A vehicle includes a first motor (1), a second motor (2), a battery (5), a decider (11), a first calculator (12), a second calculator (13) and a controller (14). The decider (11) detects a state of the battery (5) and determines whether the detected state is a state where charging the battery (5) is restricted. The first calculator (12) calculates, when the first motor (1) generates the regenerative electric power under the state where charging the battery (5) is restricted, a target energy consumption representing a target value of electric power that the second motor (2) is to consume to drive the engine (3) by using the regenerative electric power. The second calculator (13) calculates an actual energy consumption that the second motor (2) requests to maintain rotating speed of the engine (3). The controller (14) adjusts angular acceleration of the engine (3) and the second motor (2), using a difference between the target energy consumption and the actual energy consumption.

## Description

### FIELD

The present invention relates to a vehicle which is capable of generating regenerative electric power.

### BACKGROUND

One of the known conventional hybrid vehicles, each of which is equipped with an engine and a driving motor, carries out control of recapturing regenerative electric power generated by the driving motor into a battery. In this control, the battery is charged with the regenerative electric power while running by inertial force, and the vehicle acquires stopping force similar to engine-braking force of engine-mounted vehicle. This control contributes not only to the improvement of fuel and electric consumption of the hybrid vehicle but also to the improvement of feeling of the driver of the vehicle.

Regenerative electric power cannot be recaptured under the states where charging the battery is restricted. For example, when the battery is fully charged or the battery temperature is extremely low, the battery charging is restricted or prohibited from the viewpoint of battery protection. Under these states, the driving feeling may be degraded because adequate regenerative braking force is not applied to the wheels.

Considering this inconvenience, there is proposed a solution that regenerative electric power is consumed by driving an electric-driven device in place of charging the battery to thereby generate regenerative braking force. For example, techniques of driving the engine by using another motor different from the driving motor under a state of fuel cutting; and driving the interior air conditioner of the vehicle are being considered (see Japanese Laid-Open Patent Publications No. 2010-247749, and No. 2012-006525. These control techniques make it possible to consume regenerative electric power even under the states where charging the battery is restricted.

### SUMMARY

### TECHNICAL PROBLEMS

However, intensity of regenerative braking force depends on intensity of electric power consumed by such an electric-driven device. Therefore, the intensity of the regenerative braking force may fluctuate with the operating state of the electric-driven device, which hinders the driver to obtain stable driving feeling.

For example, when the motor is driven by the regenerative electric power to drive the engine, electric power consumed by the motor fluctuates according to a load on the motor and a rotating speed (corresponding to the number of revolution per unit time) of the motor. The motor being rotating at a low rotating speed consumes a small amount of electric power, which makes it difficult to obtain sufficient regenerative braking force. In contrast, the motor being rotating at a high rotating speed consumes a large amount of energy, which excessively generates regenerative braking force.

With the foregoing problem in view, one of the objects of the present invention is to provide a vehicle that makes the consumed electric power appropriate so that the driving feeling can be improved. In addition to the above object, advantages derived from the configurations described in the following "embodiments to carry out Invention" but not obtained by the conventional techniques can be considered as other objects of the present invention.

### SOLUTION TO PROBLEMS

(1) There is disclosed a regeneration controller for a hybrid vehicle, the regeneration controller including a first motor that drives a vehicle and generates regenerative electric power; a second motor being capable of driving an engine and being capable of generating electric power when being driven by the engine; a battery connected to both the first motor and the second motor to provide and receive electric power; and a decider that detects a state of the battery and determines whether the detected state is a state where charging the battery is restricted.

The regeneration controller further includes a first calculator that calculates, when the first motor generates the regenerative electric power under the state where charging the battery is restricted, a target energy consumption representing a target value of electric power that the second motor is to consume to drive the engine by using the regenerative electric power generated by the first motor; a second calculator that calculates an actual energy consumption that the second motor requires to a maintain rotating speed of the engine and the second motor; and a controller that adjusts angular acceleration of the engine and the second motor, using a difference between the target energy consumption and the actual energy consumption.

Throughout the specification, the term "angular acceleration" is used synonymously with the term "rotational acceleration".

The controller preferably adjusts the angular acceleration to decrease the difference. In other words, the controller preferably increases or decreases the angular acceleration such that the difference approaches zero.

A preferable "exceeding or lacking electric power", which is obtained by subtracting the actual energy consumption from the target energy consumption, has the same sign (positive or negative) as that of the angular rotation. In this case, when the exceeding or lacking electric power has a larger positive value, the controller preferably increases the angular acceleration in the range of a positive value. In addition, the controller preferably sets the angular acceleration to be zero when the exceeding or lacking electric power is zero, and decreases the angular acceleration in the range of the negative value (i.e., increases the absolute value) when the exceeding or lacking electric power is negative. This means that, when the exceeding or lacking electric power is positive, the rotation of the second motor is preferably increased while when the exceeding or lacking electric power is negative, the rotation of the second motor is preferably reduced.
(2) As a preferable feature, the controller may determine the angular acceleration of the second motor, using the difference and rotary inertia of both the engine and the second motor.
(3) As another preferable feature, the controller may carry out firing-control on the engine such that a target torque is equal to or less than a combustible limit torque in parallel with motoring-control on the engine by the second motor.
The combustible limit torque is a torque generated by burning under a combustible limit state (corresponding to the lower limit of the combustible concentration of air-fuel mixture).

(4) As an additional preferable feature, the first calculator may calculate the target energy consumption, using a coolant temperature of the engine.
(5) As a further additional preferable feature, the first calculator may calculate the target energy consumption based on the target torque of the engine.

### ADVANTAOEOUS EFFECTS

The regeneration controller disclosed herein can easily causes the actual rotating speed of the second motor to converge on the target rotating speed by adjusting the angular acceleration of the second motor on the basis of the difference between the target energy consumption and the actual energy consumption. Even when a change in angular acceleration accompanies a change in actual energy consumption, the regeneration controller can reflect the change of the actual energy consumption in the control. This makes it possible to keep the regenerative braking force to be substantially constant to obtain appropriate actual energy consumption and to thereby improve the driver's feeling while the regenerative braking force is affected.

### RRIEF DESCRIPTION OF DRAWINGS

FIG. 1 is a diagram schematically illustrating a vehicle to which a regeneration controller is applied;
FIG. 2 is a graph illustrating the relationship between the exceeding or lacking electric power and an angular acceleration;
FIG. 3 is a flow diagram denoting a succession of procedural steps of exceeding electric-power consumption control;
FIG. 4A is a graph denoting a chronological change of accelerator opening;
FIG. 4B is a graph denoting a chronological change of a torque of the generator; and
FIG. 4C is a graph denoting a chronological change of the generator speed (rotating speed of a generator).

### DESCRIPTION OF EMBODIMENTS

Hereinafter, description will now be made in relation to a regeneration controller according to an embodiment by referring to the accompanying drawings. The following embodiment is a merely example and there is no intention to exclude various modifications and application of techniques that are not described in the following embodiment. The configurations of the embodiment can be variously modified without departing from the respective purposes and may be selected, omitted, and combined.

### 1. Vehicle

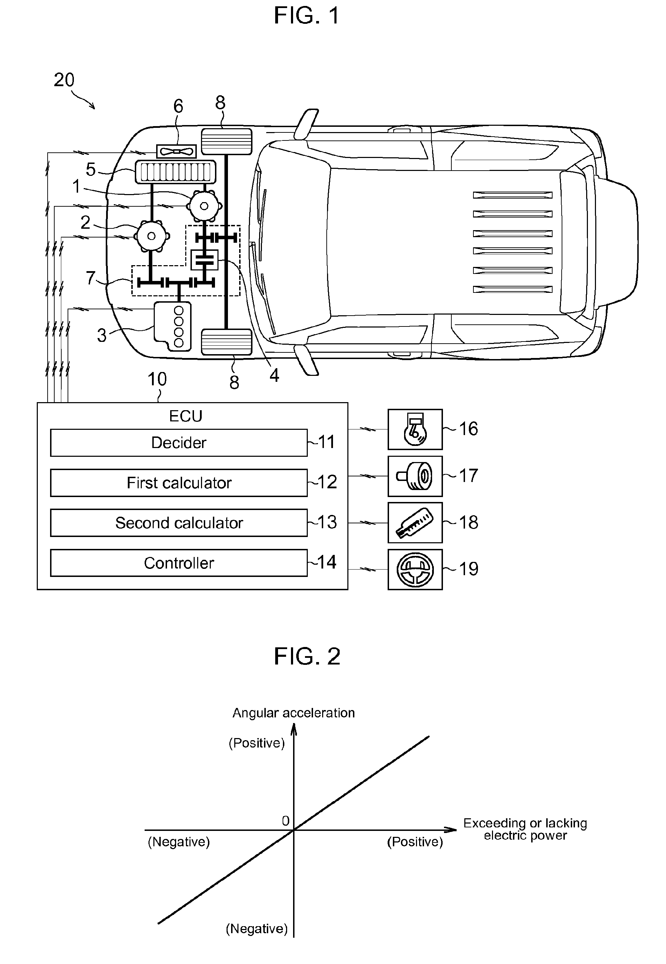

FIG. 1 illustrates an example of the structure of the powertrain of a vehicle 20 to which a regenerative controller according to this embodiment is applied. The vehicle 20 is a series-parallel-combined hybrid vehicle including a driving motor 1 (first motor) and an engine 3. Both the driving motor 1 and the engine 3 are serving as the driving sources. An example of the engine 3 is an internal combustion engine such as a gasoline engine or a diesel engine and drives the rotation axis by burning air-fuel mixture containing fuel (e.g., gasoline, light oil) in a combustion chamber. The driving motor 1 is an alternating-current (AC) motor generator (driving motor generator) that has functions as a motor (vehicle driving function) and as a generator (regenerative electric power generating function). The driving motor 1 and the engine 3 are arranged in parallel with wheels 8 and are capable of transmitting driving force to the wheels 8 independently of each other (or concurrently).

A transaxle (transmission unit) 7 is interposed between the wheels 8 and the two driving sources 1 and 3. The transaxle 7 is a power transmission unit that integrates the final drive (final reduction drive), including a differential gear, and the transmission. The transaxle 7 includes multiple mechanisms in charge of power transmission route between power sources and devices to be driven. The transaxle 7 includes therein a transmission mechanism to vary a reduction rate and a clutch 4 that connects and disconnects the power transmission route between the engine 3 and the wheels 8. Controlling connection and disconnection state of the clutch 4 connects or disconnects the engine 3 to and from the power transmission route.

The engine 3 is engaged to the transaxle 7 at a position upstream from the clutch 4. A generator 2 (second motor) is also engaged to the transaxle 7 at a position upstream from the clutch 4, and upper than the engine 3. The generator 2 is an alternating-current motor generator (motor generator) having two functions as a generator that generates electric power, using the driving force of the engine 3, and as a driving motor (electric motor) that rotates and starts the engine 3. When the driving motor 1 generates regenerative electric power, the generator 2 of this embodiment controls to consume exceeding regenerative electric power by rotating the engine 3. This control is called "exceeding electric-power consumption control".

The driving motor 1 and the generator 2 are connected to a battery 5 for running the vehicle 20. A battery air conditioner 6 is disposed inside the casing of the battery 5. The battery air conditioner 6 adjusts the temperature inside the casing. For this purpose, the battery air conditioner 6 includes, for example, a duct member that forms flow path of air circulating inside the casing, an air blower (fan), a heater, an evaporator, and a heat exchanger. A non-illustrated inverter is provided on an electric-power supplying circuit that connects the driving motor 1 and the generator 2 to the battery 5. The inverter serves as a transformer (transforming circuit) that converts alternating-current electric power of the driving motor 1 and the generator 2 into direct-current electric power and in contrast, converts direct-current electric power of the battery 5 into alternating-current electric power. Controlling the operation of the inverter makes it possible to, for example, supply the electric power of the battery 5 to the driving motor 1 and the generator 2 individually. In the same manner, the presence of the inverter makes it possible to charge the battery 5 with the electric power generated by each of the driving motor 1 and the generator 2.

The operating states of the driving motor 1, the generator 2, the engine 3, and the battery air conditioner 6 are comprehensively controlled by an ECU 10 (Electronic Control Unit). An example of the ECU 10 is an LSI (Large-Scale Integration) or a built-in electronic device in which a microprocessor, a ROM (Read Only Memory), and a RAM (Random Access Memory) are integrated. The ECU 10 is connected to a communication line of a on-vehicle network installed in the vehicle 20. An engine speed sensor 16, a vehicle speed sensor 17, a coolant temperature sensor 18, and a paddle shift sensor 19 are connected to the ECU 10.

The sensors 16-18 detect engine speed (engine revolution number per second), vehicle speed, and coolant temperature, respectively. The paddle shift sensor 19 detects the operated position of a puddle shift device. The puddle shift device is an input device through which the driver selectively sets the intensity (strength) of the regenerative braking force among multiple stepwise candidates. Any number of stepwise candidates can be set. If six stepwise candidates are set, each of the steps is called B0, B1, ..., B4, or B5 in increasing order of the regenerative braking force. The paddle shift sensor 19 detects a current step based on the operated state of the puddle shift device and sends the detected information to the ECU 10.

### 2. Details of control

Hereinafter, description will now be made focusing on exceeding electric-power consumption control among various controls performed by the ECU 10. The exceeding electric-power consumption control causes the generator 2 to consume exceeding regenerative electric power generated by the driving motor 1. Specifically, the exceeding electric-power consumption control lets the engine 3 fire (firing-control) and also rotates generator 2 to provide driving force to the engine 3 (motor-control) while the driving motor 1 generates the regenerative electric power, so that the generator 2 consumes the regenerative electric power without excess and shortage of the electric power.

In the exceeding electric-power consumption control, a target torque of the engine 3 is set to be equal to or less than a combustible limit torque and consequently, a fuel injection amount and an air intake amount are set such that the engine 3 goes into a driving state of a lower torque than that in the idling state. The combustible limit torque is a torque generated by burning under a combustible limit state (corresponding to the lower limit of the combustible concentration of air-fuel mixture). The combustible limit torque has a smaller value than that of the idling torque for keeping the engine 3 idling.

During the exceeding electric-power consumption control, a generator speed and a torque of the generator 2 are controlled so as to consume an amount of the target electric power (target energy consumption) without being affected by the running state of the vehicle 20 and the driving state of the engine 3. The target energy consumption is a target value of electric power to be consumed by the generator 2 and is set depending on an amount of the regenerative electric power being generated by the driving motor 1 and the regenerative braking force requested by the vehicle 20 or the driver. In this embodiment, the target energy consumption is calculated using the vehicle speed, the coolant temperature, and the target torque of the engine 3, for example.

An electric power that the generator 2 actually consumes (i.e., actual energy consumption) is calculated on the basis of the driving state of the generator 2 (the generator speed and the torque of the generator 2). Since the generator 2 of this embodiment is connected to the engine 3, the actual energy consumption can also be calculated from the driving state of the engine 3. Here, the difference between the target energy consumption and the actual energy consumption of the generator 2 corresponds to electric power (energy) in excess or shortage to exhaust the target energy consumption.

This means that actual energy consumption smaller than target energy consumption makes it difficult to ensure regenerative braking force having an adequate intensity. In order to avoid this inconvenience, an excess of electric power is used for increasing the generator speed and a shortage of electric power is used for decreasing the generator speed, in this control. The generator 2 is controlled such that the target energy consumption is always exhausted successfully. At that time, the engine 3 is itself firing and also is being rotated (accompanied) by the generator 2. Accordingly, the engine speed increases or decreases in harmonization with the change in generator speed.

### 3. ECU

To accomplish the exceeding electric-power consumption control, the ECU 10 includes functional elements of a decider 11, a first calculator 12, a second calculator 13, and a controller 14. These functional elements may be achieved by an electronic circuit (hardware), by software program recorded and stored in the ROM of the ECU 10 or an auxiliary storage device, or by means of a combination of hardware and software.

### 3-1. Decider

The decider 11 determines the condition to perform the exceeding electric-power consumption control. Specifically, the condition is satisfied when the following execution conditions #1 and #2 are both satisfied and concurrently at least one of (preferably both) the following execution conditions #3 and #4 is satisfied.
#1 the driving motor 1 is generating regenerative electric power.
#2 the battery 5 is restricted to being charged.
#3 the position of the puddle shift is one of B2-B5.
#4 the vehicle speed is higher than a threshold speed.

The above execution condition #2 is satisfied when any one of the following restriction conditions #1-#3 is satisfied. The result of the determination made by the decider 11 is notified to the controller 14. This means that the decider 11 has a function as a condition decider that detects the state of the battery 5 and determines whether the battery 5 is in the state of being restricted to being charged.
#1 the charging rate of the battery 5 is equal to or higher than a threshold close to fully charged.
#2 the temperature of the battery 5 is equal to or lower than a first threshold temperature (low temperature).
#3 the temperature of the battery 5 is equal to or higher than a second threshold temperature (high temperature).

### 3-2. First calculator

The first calculator 12 (target energy consumption calculator) calculates the target energy consumption of the generator 2. In the illustrated example, the target energy consumption is calculated on the basis of the vehicle speed, the coolant temperature, and the target torque of the engine 3. In other words, the target energy consumption is based on the product of a stationary target rotating speed of the generator 2 and stationary target torque loaded on the generator 2. The stationary target rotating speed means a rotating speed that the generator 2 is expected to consume the target energy consumption, and the stationary target torque means a torque under states where the generator 2 is rotating at the stationary target rotating speed. The information of the target energy consumption calculated by the first calculator 12 is sent to the controller 14.

For example, the amount of the regenerative electric power generated by the driving motor 1 is calculated on the basis of the vehicle speed, and friction of the engine 3 (load of the generator 2, which is applied to the engine 3) is calculated on the basis of the coolant temperature. After that, the stationary target rotating speed is calculated on the basis of the amount of regenerative electric power and the friction. The three-way relationship of the stationary target rotating speed, the vehicle speed and the coolant temperature may be expressed in an expression or a map beforehand, and the stationary target rotating speed may be obtained by using the expression or the map.

The stationary target torque of the generator 2 is calculated on the basis of the target torque of the engine 3. For example, the stationary target torque is a differential torque calculated by subtracting the target torque of the engine 3 from the idling torque of the engine 3. Since the target torque of the engine 3 is smaller than the idling torque, the stationary target torque takes a positive value.

### 3-3. Second calculator

The second calculator 13 (actual energy consumption calculator) calculates the actual energy consumption of the generator 2. In the illustrated example, electric power for the engine 3 and the generator 2 to keep the respective rotating speed is calculated to be the actual energy consumption on the basis of the current driving state of the engine 3. This means that the actual energy consumption is equal to the intensity of electric power that the generator 2 can consume when the current rotating states of the generator 2 and the engine 3 are not changed. The information of the actual energy consumption calculated by the second calculator 13 is sent to the controller 14.

The actual energy consumption can be calculated on the basis of the driving state of the generator 2 itself. For example, the calculation of the actual energy consumption is based on the rotating speed and the torque of the generator 2. Alternatively, the actual energy consumption may be calculated on the basis of an electric current and a voltage to drive the generator 2. Further alternatively, since the generator 2 of this embodiment is connected to the engine 3, the actual energy consumption may be calculated on the basis of the driving state (engine speed, the stationary target torque) of the engine 3.

### 3-4. Controller

The controller 14 (angular acceleration controller) controls angular acceleration (rotational acceleration) of the engine 3 and the generator 2. The controller 14 increases or decreases (i.e., adjusts) the angular acceleration on the basis of the difference between the target energy consumption and the actual energy consumption, considering the inertia of the engine 3 and the generator 2. Here, a value obtained by subtracting the actual energy consumption from the target energy consumption is calculated to be "exceeding or lacking electric power". The controller 14 controls the angular acceleration such that the absolute value of the exceeding or lacking electric power comes to be smaller.

If the exceeding or lacking electric power is positive, the angular acceleration is also set in positive and the rotating speed is controlled to increase. On the other hand, if the exceeding or lacking electric power is negative, the angular acceleration is also set in negative and the rotating speed is controlled to decrease. Furthermore, when the absolute value of the exceeding or lacking electric power is larger, the absolute value of the rotating speed more increases. In this embodiment, the controller 14 calculates the angular acceleration (rate of changing rotating speed, amount of increasing or decreasing the rotating speeds per unit time) corresponding to the exceeding or lacking electric power using the linear map as illustrated in FIG. 2. The shape of the graph of FIG. 2 (the inclination or the curvature) depends on the inertia (rotating inertia) of the generator 2 and the engine 3.

The controller 14 converts the calculated angular acceleration into an amount of increasing or decreasing the rotating speed by multiplying the angular acceleration by a predetermined unit time (e.g., time for a calculating cycle), and adds the amount of increasing or decreasing to the current rotating speed (actual rotating speed) of the generator 2 to calculate a transient target rotating speed of the generator 2. After that, the controller 14 outputs a control signal to drive the generator 2 on the basis of the transient target rotating speed and the stationary target torque to the inverter. The voltage and the frequency to drive the generator 2 is controlled such that the rotating speed and the torque of the generator 2 come to be the transient target rotating speed and the stationary target torque, respectively.

The transient target rotating speed is a target value of the generator speed in the transient state that the actual rotating speed of the generator 2 converges on the stationary target rotating speed. The transient target rotating speed finally coincides with the stationary target rotating speed in the transient state. A larger exceeding or lacking electric power increases speed of changing the transient target rotating value and consequently the generator speed comes closer to the stationary target rotating speed rapidly. On the other hand, a smaller exceeding or lacking electric power decreases the speed of changing the transient target rotating value and consequently the generator speed comes closer to the stationary target rotating speed slowly. The transient target rotating speed changes so as to approximate to the stationary target rotating speed in either case.

### 4. Flow diagram

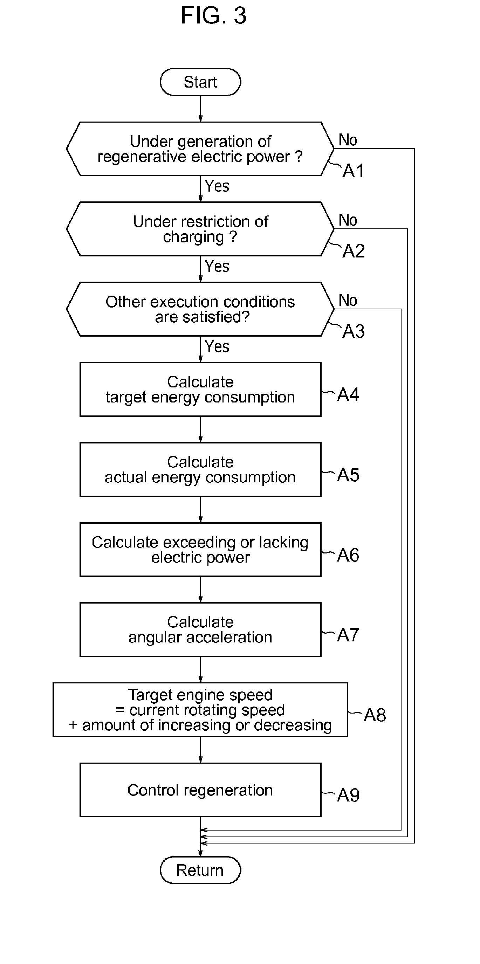

FIG. 3 is a flow diagram denoting a succession of procedural steps of the exceeding electric-power consumption control. The steps of the flow diagram are periodically repeated at predetermined calculation cycle. In step A1, the decider 11 determines whether the driving motor 1 is generating regenerative electric power (execution condition #1). If the driving motor 1 is generating regenerative electric power, the process proceeds to step A2, while if the driving motor 1 is not generating regenerative electric power, the control of this calculation cycle ends.

In step A2, the decider 11 determines whether the battery 5 is restricted to being charged (execution condition #2). For example, if any one of the restriction conditions #1-#3 is satisfied, the execution condition #2 is determined to be satisfied and the process proceeds to step A3. In contrast, none of the restriction conditions #1-#3 is satisfied, the execution condition #2 is determined not to be satisfied and the procedure the control of this calculation cycle ends.

In step A3, the decider 11 determines whether at least either one of the above execution conditions #3 and #4 is satisfied. If at least one of the above execution conditions #3 and #4 is satisfied, the process proceeds to step A4 to carry out the exceeding electric-power consumption control, while if the execution conditions #3 and #4 are not both satisfied, the control of this calculation cycle ends. Alternatively, the decider 11 may determine whether additional conditions, such as whether the engine 3 is operating and whether the clutch 4 is disengaged, are satisfied in addition to the above determination.

In step A4, the first calculator 12 calculates the target energy consumption of the generator 2. The stationary target rotating speed of the generator 2 is calculated on the basis of, for example, the vehicle speed and the coolant temperature and also the stationary target torque of the generator 2 is calculated on the basis of the idling torque and the target torque of the engine 3. Then, the first calculator 12 calculates the target energy consumption based on the stationary target rotating speed and the stationary target torque of the generator 2.

In the ensuing step A5, the second calculator 13 calculates the actual energy consumption of the generator 2. The actual energy consumption is calculated on the basis of, for example, the running state (engine speed, the stationary target torque) of the engine 3. In step A6, the controller 14 calculates the exceeding or lacking electric power by subtracting the actual energy consumption from the target energy consumption. When the electric power that the generator 2 consumes is smaller than the regenerative electric power generated in the driving motor 1, the exceeding or lacking electric power takes a positive value.

In step A7, the angular acceleration (rate of changing the rotating speed) compensating for exceeding or lacking electric power is calculated by referring to, for example, the map of FIG. 2. The angular acceleration calculated in step A7 becomes larger when larger energy consumption lacks (i.e., in cases where a larger amount of electric power is wished to be consumed). In step A8, the angular acceleration obtained in the previous step is converted into an amount of increasing or decreasing the rotating speed and the sum of the current rotating speed of the generator 2 and the amount of increasing or decreasing is calculated to be the transient target rotating value. In step A9, the inverter is controlled on the basis of the transient target rotating speed and the stationary target torque. Consequently, the rotating speed and the torque of the generator 2 are both controlled to be the transient target rotating speed and the stationary target torque, respectively.

### 5. Effects

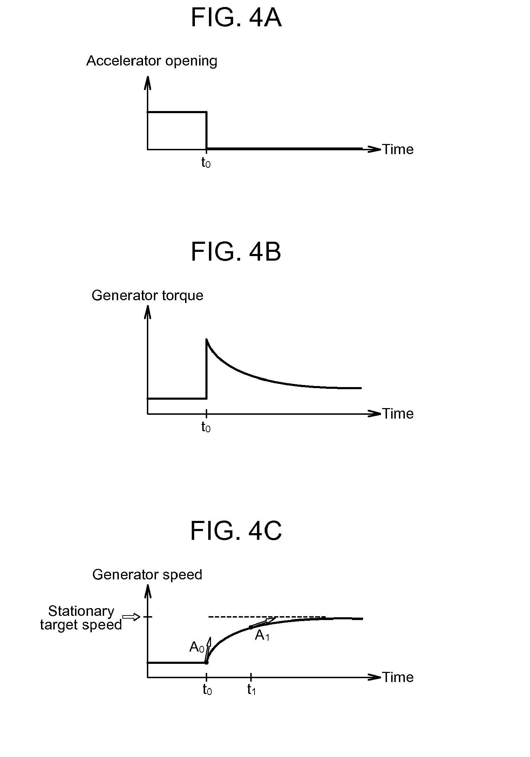

Next, description will now be made in relation to change in the rotating state (torque and rotating speed) of the generator 2 when the exceeding electric-power consumption control is started by referring to FIGs. 4A-4C. Assuming that the driver eases up on the accelerator pedal of the vehicle 20 running a flat road at time to, the vehicle 20 comes into a state of inertially running and the driving motor 1 starts generation of regenerative electric power. If the battery 5 is in the state of being restricted to being charged, the exceeding electric-power consumption control is started. This example assumes that the engine 3 starts firing at the combustible limit torque before the time to and the generator 2 outputs a torque corresponding to the difference between the idling torque and the combustible limit torque.

For the exceeding electric-power consumption control, the angular acceleration of the generator 2 is set on the basis of the exceeding or lacking electric power (the difference between the target energy consumption and the actual energy consumption). For example, the angular acceleration A₀ at the time to when the exceeding electric-power consumption control is started is set to be larger when the actual energy consumption of the generator 2 is smaller as compared with the amount of regenerative electric power. This means that, as denoted in FIG. 4C, the inclination of the generator-speed graph increases to largely increase the rotating speed of the generator 2 and the engine 3. As denoted in FIG. 4B, the torque of the generator 2 also increases.

The angular acceleration A₁ at the time t₁ when the rotating speed of the generator 2 rises some extent is set to be smaller than the angular acceleration A₀ at the time to because the actual energy consumption of the generator 2 increases as much as the rise of the rotating speed of the generator 2 so that the exceeding or lacking electric power decreases. Consequently, as denoted in FIG. 4C, the inclination of the generating-speed graph gradually reduces and finally the rotating speed of the generator 2 and the engine 3 converges on the stationary target rotating speed. As denoted in FIG. 4B, the decreasing inclination of the torque of the generator 2 reduces and then the exceeding or lacking electric power of the generator 2 converges on zero.
(1) In the regeneration controller, the angular acceleration of the generator 2 is controlled so as to increase or decrease on the basis of the difference between the target energy consumption and the actual energy consumption. Adopting this control manner makes it possible to appropriately control the inclination of the generator-speed graph of the generator 2, as illustrated in FIG. 4C, and to allow the rotating speed of the generator 2 to easily converge on the stationary target rotating speed. Even when the battery 5 is not able to be charged because, for example, the battery 5 is fully charged or the vehicle 20 is running in extremely low temperature environment, the exceeding regenerative electric power can be exactly exhausted in the engine 3 and generator 2, so that regenerative braking force can be maintained to be
approximately constant.

Even when a change in angular acceleration accompanies a change in actual energy consumption, the change of the actual energy consumption can be reflected in the control. For example, as denoted in FIG. 4C, when the exceeding or lacking electric power is large, the inclination of the generator speed can be set to be large while when the exceeding or lacking electric power is small, the inclination of the rotating speed can be set to be small. Thereby, the sum of energy consumption in the generator 2 can be substantially constant. In other words, the sum of electric power to maintain the rotation and electric power to increase or decrease the rotating speed is substantially constant. This makes it possible to keep the regenerative braking force to be substantially constant to make the actual energy consumption appropriate and to thereby improve the driver's feeling while the regenerative braking force is applied.
(2) As illustrated in FIG. 2, the angular acceleration is set on the basis of the inertia of the generator 2 and the engine 3 and the difference between the target energy consumption and the actual energy consumption in the above regeneration controller. Such control of the rotating state of the generator 2 in consideration of rotating inertia of a system including the generator 2 and the engine 3 makes the rotating speed of the generator 2 easy to converge on the stationary target rotating speed. The capability of convergence of the rotating speed of the generator 2 and the engine 3 can be enhanced, which also enhances the stability in controlling.

(3) In the regeneration controller, the firing-control on the engine 3 is carried out in parallel with the motoring-control on the engine 3 performed by the generator 2. The target torque of the engine 3 under the firing-control is set to be equal to or smaller than the combustible limit torque smaller than the idling torque. This can reduce the fuel consumption as compared with that consumed in the idling state, so that the fuel consumption of the engine 3 can be improved. Since the differential torque between the idling torque and the combustible limit torque is set to be the stationary target torque of the generator 2, the rotating state of the engine 3 can be stabilized.

From the viewpoint of the fuel consumption of the engine 3 alone, the motoring-control by the generator 2 may be carried out, but the firing-control on the engine 3 may not be carried out. However, in this case, the cylinder oil in the engine 3, which is not in the burning state, easily volatizes and leaks into the air intake/exhaust system, and therefore there is a possibility of soiling the sensors in the air intake/exhaust system with the leaking oil. In contrast, the above regeneration controller carries out the firing-control on the engine 3, which can inhibit soiling the air intake/exhaust system with the cylinder oil of the engine 3, so that the precision of the sensors can be prevented from lowering.
(4) In the above regeneration controller, the target energy consumption of the generator 2 is calculated using the coolant temperature. This makes it possible to grasp the fluctuation in load on the generator 2 due to the friction of the engine 3, so that the control accuracy of the regenerative braking force can be enhanced.
(5) In the above regeneration controller, the target energy consumption of the generator 2 is calculated using the target torque of the engine 3. This makes it possible to precisely grasp the workload that the generator needs to provide to the engine 3, so that the control accuracy of the regenerative braking force can be enhanced.

(6) In the above regeneration controller, as one of the execution conditions for the exceeding electric-power consumption control, the battery 5 is determined whether the battery 5 is in the state of being restricted to being charged. This can ensure stable regenerative braking force, avoiding overcharging the battery 5 and constrained charging of the battery 5 in low- and high temperature environment.

### 6. Modification

The present invention is by no means limited to the above embodiment, and various changes and modifications can be suggested without departing from the purpose of the embodiment. The respective configurations of the above embodiment may be selected, omitted, and appropriately combined. For example, the exceeding electric-power consumption control is carried out under a state where the battery 5 is restricted to being charged. However, this condition is not indispensable. Since the object of the exceeding electric-power consumption control is "to reserve desired regenerative braking force by consuming, in the generator 2, the regenerative electric power generated by the driving motor 1 without exceeding or shortage", it is possible to remove the execution conditions #2-#4 in the above embodiment. The same is applied to the restriction conditions #1-#3, which can be appropriately set in accordance with the type of the target battery 5 and the charging-discharging property of the battery 5.

In the above embodiment, the exceeding or lacking electric power and the angular acceleration have relationship represented by the linear function of FIG. 2. This relationship may be arbitrarily determined. In satisfactory relationship, the angular acceleration is set at least based on the exceeding or lacking electric power.

In the above embodiment, the firing-control on the engine 3 is carried out in parallel with the motor-control on the engine 3. Alternatively, only the motor-control may be carried out on the engine 3, stopping the firing-control (i.e., fuel cutting) on the engine 3. In this case, if the target torque (combustible limit torque) of the engine 3 is regarded as zero, the same effects can be obtained by the same control as performed in the above embodiment.

The invention thus described, it will be obvious that the same may be varied in many ways. Such variations are not to be regarded as a departure from the purpose and scope of the invention, and all such modifications as would be obvious to one skilled in the art are intended to be included within the scope of the following claims.

### PEFERENCE SIGNS LIST

- 1: driving motor (first motor)
- 2: generator (second motor)
- 3: engine
- 4: clutch
- 5: battery
- 6: battery air conditioner
- 7: transaxle
- 8: wheel
- 10: ECU (Electronic Control Unit)
- 11: decider
- 12: first calculator (target energy consumption calculator)
- 13: second calculator (actual energy consumption calculator)
- 14: controller (angular acceleration controller)
- 16: engine speed sensor
- 17: vehicle speed sensor
- 18: coolant temperature sensor
- 19: puddle shift sensor
- 20: vehicle

## Claims

1. A regeneration controller for a hybrid vehicle, the regeneration controller comprising
a first motor (1) that drives a vehicle and generates regenerative electric power,
a second motor (2) being capable of driving an engine (3) and being capable of generating electric power when being driven by the engine (3), and
a battery (5) connected to both the first motor (1) and the second motor (2) to provide and receive electric power,
**characterized in that** the regeneration controller further comprises:
a decider (11) that detects a state of the battery (5) and determines whether the detected state is a state where charging the battery (5) is restricted;
a first calculator (12) that calculates, when the first motor (1) generates the regenerative electric power under the state where charging the battery (5) is restricted, a target energy consumption representing a target value of electric power that the second motor (2) is to consume to drive the engine (3) by using the regenerative electric power generated by the first motor (1);
a second calculator (13) that calculates an actual energy consumption that the second motor (2) requests to maintain a rotating speed of the engine (3) and the second motor (2); and
a controller (14) that adjusts angular acceleration of the engine (3) and the second motor (2), using a difference between the target energy consumption and the actual energy consumption.

2. The regeneration controller according to claim 1, wherein the controller (14) determines the angular acceleration of the second motor (2), using the difference and rotary inertia of both the engine (3) and the second motor (2).

3. The regeneration controller according to claim 1 or 2, wherein the controller (14) carries out firing-control on the engine (3) such that a target torque is equal to or less than a combustible limit torque in parallel with motoring-control on the engine (3) by the second motor (2).

4. The regeneration controller according to one of claims 1-3, wherein the first calculator (12) calculates the target energy consumption, using a coolant temperature of the engine (3).

5. The regeneration controller according to one of claims 1-4, wherein the first calculator (12) calculates the target energy consumption based on the target torque of the engine (3).
